Europäisches Patentamt

European Patent Office

Office européen des brevets

(11) Numéro de publication: **0 521 749 B1**

(12) **FASCICULE DE BREVET EUROPEEN**

(45) Date de publication du fascicule du brevet: **06.09.95** (51) Int. Cl.⁶: **C23C 2/14**, G05D 5/03, C23C 2/18

(21) Numéro de dépôt: **92401692.6**

(22) Date de dépôt: **17.06.92**

(54) **Procédé de régulation d'un traitement métallurgique effectué sur un produit en défilement et dispositif pour sa mise en oeuvre.**

(30) Priorité: **01.07.91 FR 9108168**

(43) Date de publication de la demande:
**07.01.93 Bulletin 93/01**

(45) Mention de la délivrance du brevet:
**06.09.95 Bulletin 95/36**

(84) Etats contractants désignés:
**AT BE CH DE DK ES FR GB GR IT LI LU NL PT SE**

(56) Documents cités:
**EP-A- 0 329 157     EP-A- 0 390 686**
**DE-A- 3 151 448     FR-A- 2 280 439**
**FR-A- 2 280 573     US-A- 3 557 351**

**PATENT ABSTRACTS OF JAPAN vol. 12, no. 275 (C-516)(3122) 29 Juillet 1988**

**PATENT ABSTRACTS OF JAPAN vol. 5, no. 62 (C-52)(734) 25 Avril 1981**

**PATENT ABSTRACTS OF JAPAN vol. 4, no. 174 (C-33)(656) 2 Décembre 1980**

(73) Titulaire: **SOLLAC**
**Immeuble Elysées-La Défense, 29 Le Parvis**
**F-92800 Puteaux (FR)**

(72) Inventeur: **Vigneron, Guy**
**3, rue du Sorbier**
**F-57110 Stuckange (FR)**
Inventeur: **Fenot, Claude**
**3, rue des Roses**
**F-57158 Montigny les Metz (FR)**

(74) Mandataire: **Polus, Camille et al**
**c/o Cabinet Lavoix**
**2, Place d'Estienne d'Orves**
**F-75441 Paris Cedex 09 (FR)**

**Description**

La présente invention concerne les traitements métallurgiques réalisés sur des produits en défilement tels que des bandes ou des fils.

Actuellement, on détermine dans un laboratoire un modèle physique ou mathématique du processus de traitement et on définit des préceptes de réglage du traitement pour obtenir un résultat désiré. Il ne s'agit donc pas d'une régulation véritable en boucle fermée.

Les processus métallurgiques étant complexes, la détermination du modèle précité peut demander plusieurs années d'étude.

Les préceptes de réglage doivent être recalculés à chaque fois que l'un des paramètres du traitement varie, ce qui nécessite à chaque fois des études longues lorsque l'on veut effectuer un réglage sur une machine différente.

Or il est particulièrement important dans certains cas, par exemple dans le cas de traitement de zingage d'une bande métallique qui circule dans un bain de zinc fondu, d'obtenir un contrôle précis du traitement réalisé afin de réduire le coût de fabrication en matière et les mises au rebut. En particulier, dans le cas d'un traitement de zingage par galvanisation, il est important d'obtenir une régulation précise afin de réduire la quantité de zinc utilisée.

Par ailleurs, si l'on désire effectuer une régulation, il arrive fréquemment dans les traitements métallurgiques que la mesure de contrôle ne soit faite qu'avec un retard important et variable par rapport au traitement effectué, les capteurs ne supportant pas les conditions régnant au niveau du traitement. Cela rend difficile de réaliser une régulation précise et il en résulte des consommations trop élevées de matière, par exemple de zinc dans un traitement de galvanisation.

La présente invention se propose de fournir un procédé de régulation d'un tel traitement métallurgique qui permette de réaliser une régulation précise tout en prenant en compte le retard important entre l'instant de mesure et l'instant de traitement.

La présente invention a pour objet un procédé de régulation en boucle fermée d'un traitement métallurgique effectué sur un produit en défilement, traitement dans lequel la mesure de contrôle est obtenue avec un retard important et variable par rapport au traitement régulé, procédé dans lequel on utilise un régulateur numérique à calibrage dynamique (à fonction de transfert échantillonnée RST), caractérisé en ce que l'on fait varier en permanence la fréquence d'échantillonnage de telle sorte que le retard précité reste toujours égal à un nombre entier prédéterminé de périodes d'échantillonnage.

Grâce à cette disposition, on peut s'affranchir des variations du retard entre l'instant où est effectuée la mesure de contrôle et l'instant où est réalisé le traitement.

Avantageusement, la fonction de transfert du régulateur est déterminée pour un nombre d'échantillonnages (horizon) supérieur ou égal au nombre de périodes d'échantillonnages correspondant au retard précité.

Grâce à cette disposition, le retard de la mesure de contrôle est pris en compte dans sa totalité.

Selon une autre caractéristique de l'invention, la mesure de contrôle peut être remplacée par une prédiction de résultat fournie par un prédicteur à partir de la valeur du paramètre de régulation.

Ceci permet d'obtenir une régulation en boucle fermée lors de l'initialisation du traitement, lorsque, du fait du retard important, on ne peut obtenir de valeur de mesure. Ceci est particulièrement important, lorsqu'il existe un changement de consigne, un nouveau traitement étant initialisé avec une consigne différente du traitement précédent.

Avantageusement, le prédicteur fonctionne en calibrage dynamique, ses signaux de sortie étant comparés avec le signal de mesure de contrôle.

Ceci permet d'optimiser l'algorithme du prédicteur.

Selon encore une autre caractéristique de l'invention, le régulateur effectue une régulation à objectifs indépendants en utilisant au moins un correcteur introduisant une correction tenant compte de la vitesse de défilement du produit.

Ceci permet d'obtenir un fonctionnement en régulation et en poursuite pour les phénomènes extérieurs tels que la vitesse de défilement du produit à traiter.

Dans le cas où le traitement est réalisé par un actionneur fixe disposé sur le trajet du produit à traiter, on utilise un correcteur introduisant une correction tenant compte de la position du produit par rapport audit actionneur.

Le fait de réaliser un traitement de poursuite en fonction de la position de la bande de produit par rapport à l'actionneur permet d'obtenir une régulation plus précise et, par suite, dans le cas par exemple d'un traitement de zingage, de réaliser une économie importante de zinc utilisé.

Si le traitement métallurgique est réalisé sur les deux faces de la bande, on prévoit un régulateur pour le traitement de chacune des deux faces.

2

Selon encore une autre caractéristique de l'invention, le régulateur effectue une régulation à objectifs indépendants ce qui autorise des corrections différentes en amplitude et vitesse pour les changements de consigne de revêtement (poursuite) et pour les réjections des perturbations du revêtement à consigne de revêtement constante (régulation).

L'invention a également pour objet un dispositif selon la premiére partie de la révendication 11, caractérisé en ce qu'il comporte des moyens (14) pour faire varier en permanence la fréquence d'échantillonnage de telle sorte que le retard précité reste toujours égal à un nombre entier de périodes d'échantillonnage. Avantageusement, on peut utiliser un ordinateur personnel de type courant.

D'autres caractéristiques et avantages de l'invention ressortiront de la description qui suit d'un exemple de réalisation de l'invention, faite en se référant au dessin annexé sur lequel :
- la figure 1 représente schématiquement un procédé de zingage par galvanisation ;
- la figure 2 est une vue de détail représentant les buses d'air constituant des actionneurs ;
- la figure 3 est un schéma synoptique du dispositif de régulation ;
- la figure 4 est une vue de détail du régulateur de la figure 3 ;
- la figure 5 illustre un mode de réalisation de l'invention ; et
- la figure 6 est un diagramme comparatif.

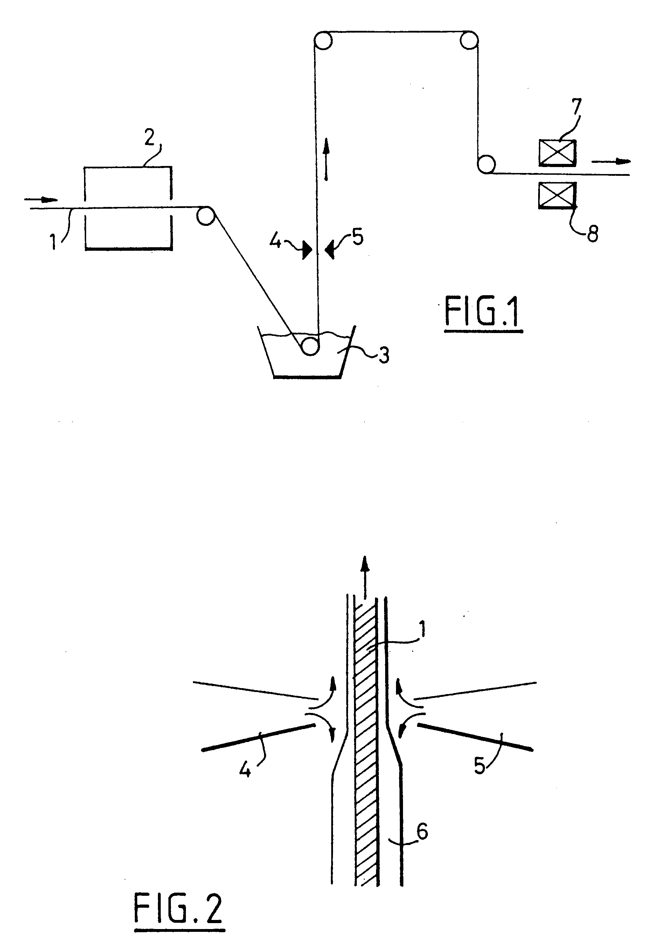

On représenté schématiquement sur la figure 1 une installation de galvanisation destinée à déposer une couche de zinc sur les deux faces d'une bande d'acier en défilement continu. La bande 1 traverse tout d'abord un four 2 dans lequel est réalisée en particulier une opération de recuit puis elle est amenée dans un bain de zinc en fusion 3 dans lequel les deux faces de la bande 1 sont recouvertes d'une couche de zinc en fusion.

La bande passe ensuite devant deux buses d'air 4 et 5 qui réalisent un "essorage" de la bande de tôle, c'est-à-dire qu'elles éliminent le surplus du zinc en fusion 6 entraîné par la bande 1.

Après un parcours d'environ une centaine de mètres pendant lequel la bande de tôle et le zinc qui s'y est déposé refroidissent, la bande 1 parvient devant des jauges de mesure 7 et 8 qui sont disposées de manière à effectuer un balayage de la largeur de part et d'autre du trajet de la bande 1 et qui mesurent chacune l'épaisseur de zinc déposée.

La figure 2 illustre en détail le mode d'action des actionneurs constitués par les buses d'air 4 et 5, le flux d'air refoulant vers le bain 3 une partie du zinc 6 qui a adhéré à la bande de tôle 1. Le réglage de l'épaisseur de zinc 6 déposée sur la bande de tôle 1 est donc réalisé par les buses 4 et 5 dont on fait varier la pression et le débit de sortie de l'air pour obtenir une réduction plus ou moins forte de la couche de zinc restant après le passage devant les buses.

La mesure de contrôle de l'épaisseur de zinc déposée est réalisée par des capteurs 7 et 8 qui sont, du fait qu'ils sont sensibles à la température, disposés à un endroit où la bande 1 est suffisamment froide et, par conséquent, distants d'une longueur de trajet d'environ cent mètres par rapport aux actionneurs constitués par les buses 4 et 5. Compte tenu de la vitesse de défilement de la bande de tôle 1, le retard entre l'instant où un emplacement de la bande 1 est traité par les buses d'air 4 et 5 et l'instant où il passe devant les jauges 7 et 8, il existe un retard d'environ deux minutes.

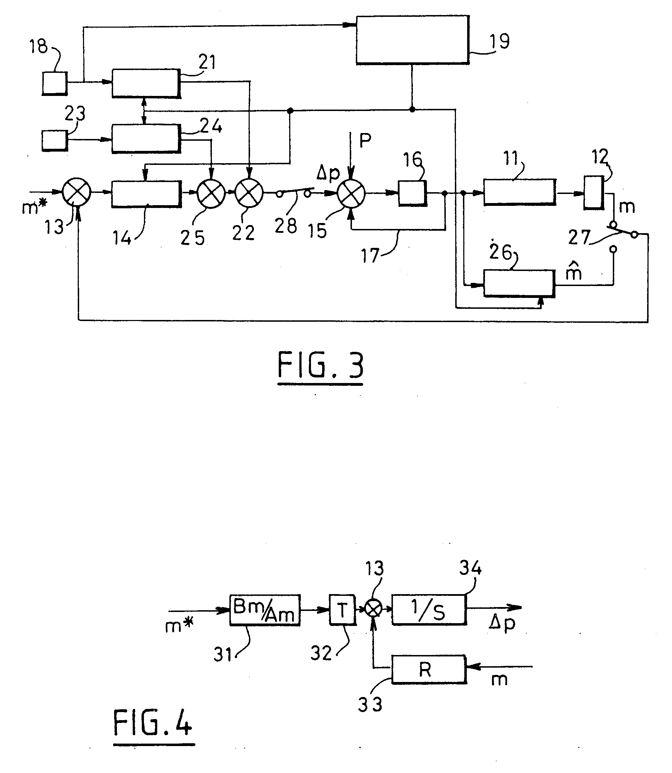

La figure 3 est un schéma synoptique du dispositif de régulation de l'épaisseur de zinc déposée dans les opérations de galvanisation en agissant sur la pression de sortie de l'air des buses 4 et 5. La référence 11 désigne l'ensemble des buses d'air constituant les actionneurs et de leurs systèmes d'alimentation en air comprimé à pression variable. Cette unité reçoit à son entrée un ordre de pression qui agit sur l'épaisseur de zinc restant sur la bande de tôle après son passage devant les buses. Une unité de mesure 12 comprenant les jauges 7 et 8 fournit à sa sortie la valeur réelle des épaisseurs de zinc déposées sur l'une des faces de la bande.

L'unité de mesure 12 fournit par exemple une mesure, m, exprimée en poids de zinc déposé par une unité de surface à un additionneur 13 qui reçoit par ailleurs une valeur de consigne, m*, qui peut varier en fonction de la qualité désirée pour la tôle galvanisée. La sortie de l'additionneur 13 est envoyée sur un régulateur numérique 14 fonctionant en calibrage dynamique, c'est-à-dire un régulateur numérique dans lequel la fonction de transfert est recalculée à chaque instant d'échantillonnage. Ce régulateur numérique 14 fournit en sortie un signal d'erreur exprimant une pression, $\Delta P$, qui est envoyée sur un additionneur 15 qui reçoit par ailleurs une valeur de consigne de pression P. Le signal résultant est envoyé sur un régulateur 16 par exemple du type proportionnel et intégral (PI) qui comporte un circuit de réaction 17 qui transmet son signal de sortie au circuit additionneur d'entrée 15.

Le signal de commande de pression fourni par le régulateur de pression 15 à 17 est envoyé à l'entrée de l'actionneur 11 décrit plus haut.

comme indiqué plus haut, la mesure m fournie par le dispositif de mesure de contrôle 12 présente un retard important et variable par rapport à l'action effectuée par l'actionneur 11.

L'ensemble des circuits actifs 11 à 16 est commandé par un dispositif d'horloge pour réaliser un traitement de calibrage dynamique, c'est-à-dire que pour chaque période d'échantillonnage déterminée par le dispositif d'horloge central, chacun des opérateurs précités est actionné et l'action est maintenue pendant chaque période d'échantillonnage.

Conformément à l'invention, la fréquence d'échantillonnage varie en permanence pour tenir compte des variations de la vitesse de défilement du produit qui est mesurée par un capteur de vitesse 18 disposé par exemple sur un rouleau d'entraînement de la bande de tôle 1. Cette variation de la fréquence d'échantillonnage est commandée de telle manière que le retard temporel entre l'action effectuée par l'actionneur 11 et la mesure effectuée par le dispositif de contrôle 12 reste constamment égal à un nombre entier prédéterminé de périodes d'échantillonnage.

Ceci est illustré sur la figure 3 par le fait que l'horloge 19 de commande des opérations d'échantillonnage reçoit à son entrée le signal de sortie du capteur de vitesse 18 et commande les différents opérateurs logiques.

Le régulateur numérique 14 calcule pour chaque période d'échantillonnage un facteur de correction de pression qui est une somme pondérée par des coefficients r,s et t qui, du fait du calibrage dynamique, sont redéfinis pour chaque période d'échantillonnage. Cette somme pondérée est calculée en tenant compte d'un certain nombre de périodes d'échantillonnage précédentes; l'horizon, c'est-à-dire le nombre de périodes d'échantillonnage précédentes prises en compte, est au moins égal au nombre de périodes d'échantillonnage qui correspond au retard de la mesure de contrôle par rapport au traitement. La correction de pression $\Delta P(t)$ pour la période d'échantillonnage à un instant t est donnée par la formule suivante:

$$\Delta P(t) = \sum_{i=0}^{Tn} t_i\, m^*(t-i) + \sum_{i=1}^{Tn} s_i\, \Delta P(t-i) + \sum_{i=0}^{Tn} r_i\, m(t-i)$$

dans laquelle $r_i$, $s_i$, et $t_i$ sont les valeurs des paramètres du régulateur pour la $i^{ème}$ période d'échantillonnage précédent la période d'échantillonnage pendant laquelle est effectué le calcul, Tn est l'horizon de commande, m(t-i) est la masse mesurée du revêtement et m*(t-i) est la valeur de consigne du revêtement pour cette $i^{ème}$ période d'échantillonnage précédent.

Conformément à l'invention, on réalise un procédé de poursuite et régulation à objectifs indépendants et l'on introduit dans la détermination de la correction de pression des facteurs correctifs tenant compte d'évènements extérieurs tels que la vitesse de la bande de tôle et sa position par rapport aux actionneurs constitués par les buses d'air.

A cet effet, le signal de mesure de vitesse fourni par le capteur 18 est envoyé sur un correcteur 21, qui est commandé par les signaux d'horloge fournis par l'horloge 19, et qui élabore un signal de correction de vitesse qui est envoyé sur un additionneur 22 qui reçoit par ailleurs le signal de correction de pression fourni par le régulateur 14.

De manière analogue, un capteur de position de la bande 23, par exemple de type capacitif, fournit un signal qui est envoyé sur un correcteur 24, qui reçoit également les signaux d'horloge de l'horloge 19 et qui fournit un signal de correction de position qui est envoyé sur un autre circuit additionneur 25 branché à la sortie du régulateur 14.

Les paramètres des correcteurs 21 et 24 sont déterminés par identification récursive sur la base de données fournies par l'installation lors d'essais où l'on ne fait varier que le paramètre correspondant, à savoir la vitesse ou la position de la bande. Ces paramètres restent constants pendant le processus de régulation.

Ces correcteurs compensent les perturbations de position et de vitesse de la bande entre les buses avant qu'elles ne soient détectées par la jauge 12 de mesure du revêtement en réalisant une action de type "feed-forward".

Selon une autre caractéristique de l'invention, le signal m fourni par le dispositif de mesure de contrôle 12 peut être remplacé, lors du processus de régulation, par un signal $\hat{m}$ fourni par un prédicteur 26 qui reçoit le signal de commande fourni à l'actionneur 11 et élabore une prédiction de la masse déposée. Ce prédicteur 26 est de type numérique et comporte également un dispositif de calibrage dynamique, c'est-à-dire que ses paramètres définissant l'algorithme de prédiction sont définis pour chaque période d'échantillonnage. Ce prédicteur 26 reçoit également un signal d'horloge provenant de l'horloge 19. Les paramètres du prédicteur 26 sont déterminés par identification récursive sur la base de données fournies par

4

l'installation où l'on ne fait varier que le paramètre correspondant, à savoir la pression.

Un commutateur bistable 27 permet d'envoyer soit le signal de mesure m soit le signal de prédiction $\hat{m}$ au circuit additionneur 13.

Le circuit de régulation comporte également un interrupteur 28 disposé entre la sortie du circuit additionneur 22 et l'entrée du circuit additionneur 15, c'est-à-dire l'entrée du circuit régulateur de la consigne de pression. Cet interrupteur autorise le fonctionnement "avec ou sans" régulation du revêtement.

En fonctionnement sans régulation, l'interrupteur 28 est ouvert et l'opérateur modifie manuellement son poids de revêtement en agissant sur la consigne de pression entrant sur le sommateur 15.

Quand l'interrupteur 28 est fermé, la régulation maintient constant le poids de revêtement en corrigeant automatiquement la pression affichée par l'opérateur.

La figure 4 est le schéma synoptique d'un détail représentant le régulateur 14.

Sur cette figure, on a représenté les différents opérateurs constituant le régulateur numérique à calibrage dynamique 14. Chacun de ces opérateurs, effectue un calcul utilisant des paramètres R,S,T,Bm et Am de la fonction de transfert qui sont redéfinis pour chaque période d'échantillonnage. L'ensemble des opérateurs représentés réalise la fonction de transfert du régulateur.

Un premier opérateur 31 reçoit la valeur de consigne m* et impose la vitesse et l'amplitude de variation de cette consigne. Le signal de sortie est envoyé sur un deuxième opérateur 32 qui compense le retard de la mesure m et dont le signal de sortie est envoyé sur l'additionneur 13. Les opérateurs 31 et 32 fixent les caractéristiques en poursuite du régulateur.

Le signal de mesure de la masse m fourni par le système de contrôle 12 est envoyé à l'entrée d'un opérateur 33 qui impose la vitesse et l'amplitude de la correction de pression et dont la sortie est également envoyée à l'entrée de l'additionneur 13 dont la sortie est envoyée sur un quatrième opérateur 34 qui annule l'erreur entre la consigne m* et la mesure m et fournit en sortie le signal ΔP de correction de pression.

Les opérateurs 33 et 34 fixent les caractéristiques en régulation du régulateur de revêtement.

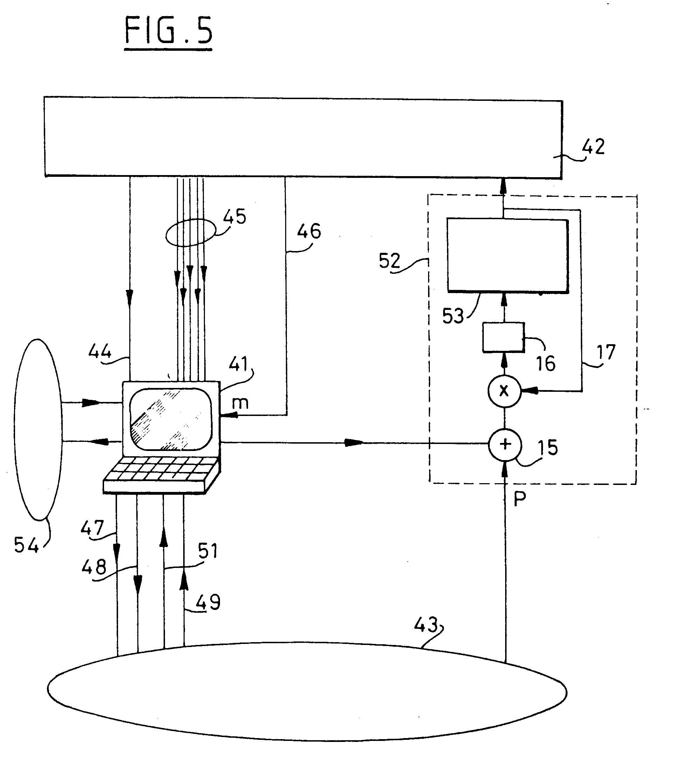

La figure 5 illustre un exemple de réalisation de l'invention. Il est basé sur l'utilisation d'un micro-ordinateur de type courant et d'un progiciel pour l'identification des modèles dynamiques de procédé.

Sur cette figure on voit une console 41 comportant un écran de visualisation et un clavier qui est relié à l'installation de traitement schématisée en 42 et un micro-ordinateur schématisé en 43. L'installation de traitement 42 fournit à la console 41 des informations provenant des capteurs, à savoir une information de vitesse (ligne 44), des informations concernant la position de la tôle (lignes 45) et une information concernant la mesure de contrôle (ligne 46).

Le système informatique reçoit de la console 41 des informations concernant la position et le profil de la tôle (ligne 47) et la mesure de contrôle (ligne 48) et renvoit la console la valeur de consigne de la masse de revêtement, m*, (ligne 49) et une information concernant la position des buses (ligne 51). Le signal de consigne de différence de pression calculé à chaque période d'échantillonnage est envoyé sur le dispositif de régulation de pression 52 dans lequel on retrouve les éléments 15 à 17 décrits en référence à la figure 3. La référence 53 désigne un compresseur qui fournit en sortie à l'installation 42 la pression destinée à une des buses.

Dans l'exemple décrit, le traitement est effectué sur les deux faces de la tôle et on prévoit donc un deuxième dispositif de régulation pour la deuxième face. Ce deuxième dispositif est schématisé en 54.

Ce dispositif de régulation a été installé sur une ligne de galvanisation dans laquelle la bande de tôle défile à une vitesse pouvant varier dans de grandes proportions à savoir 30 à 180 mètres par minute. L'horizon a été fixé à huit périodes d'échantillonnage, le retard étant maintenu à sept périodes d'échantillonnage. La période d'échantillonnage varie alors de 35,5 à 6,76 secondes.

Le fonctionnement du dispositif qui vient d'être décrit est le suivant. Lors de la mise en route d'une installation, on détermine par des méthodes d'identification récursives, sous le contrôle du progiciel pour l'identification des modèles dynamiques de procédé, les paramètres de tous les éléments décrits à la figure 2. Les algorithmes sont eux déterminés par un autre progiciel. Les paramètres des deux correcteurs 21 et 24 sont déterminés une fois pour toutes.

Lorsque l'on met en route l'installation de traitement, la régulation s'effectue en utilisant les données fournies par le prédicteur 26 et le commutateur 27 est donc dans sa position basse. Dès que le dispositif de mesure 12 peut fournir des mesures, on peut faire basculer le commutateur 27 dans la position représentée à la figure 3. L'utilisation du prédicteur 26 permet également de pallier des défaillances possibles du dispositif de mesure 12, la régulation continuant en utilisant les valeurs de prédiction $\hat{m}$.

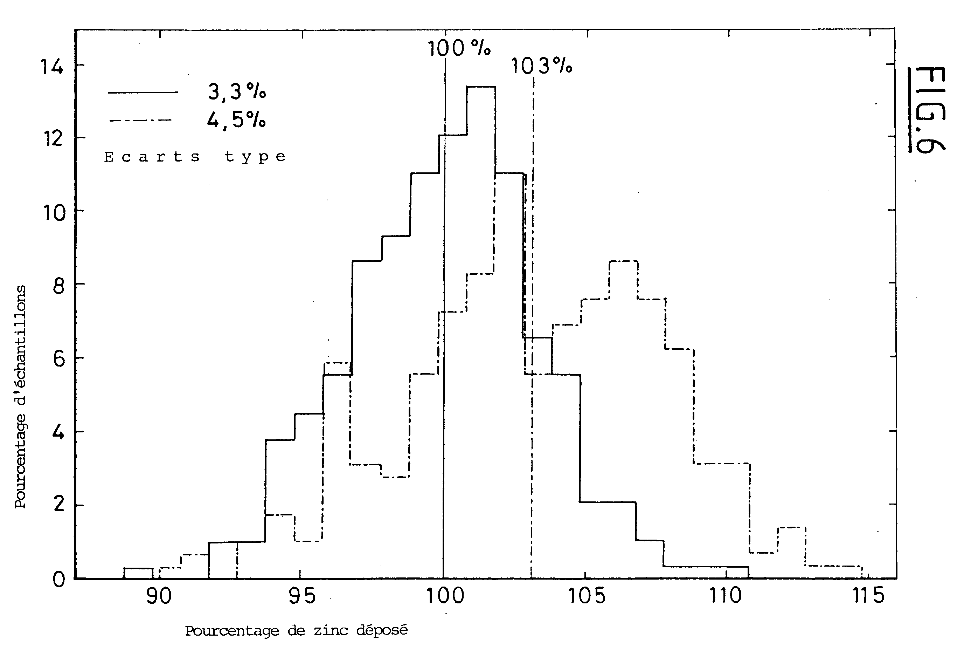

La figure 6 est un diagramme comparatif montrant les résultats obtenus sur une face sans régulation (courbe en trait interrompu)) et sur l'autre face pour laquelle le procédé selon l'invention a été mis en oeuvre (courbe en trait plein). On constate une amélioration de l'écart type de 25%, et le poids moyen de revêtement est centré sur la consigne (100%).

On voit que l'invention permet de réaliser une régulation précise d'un traitement thermique dans lequel la mesure de contrôle est effectuée avec un retard important, tel la galvanisation, ce qui permet en particulier de réaliser une économie importante au niveau de la matière utilisée, le zinc en l'occurrence.

Grâce à la régulation à objectifs indépendants effectuée par le régulateur numérique 14, les opérations de poursuite et de régulation sont définies pour des changements de consigne de la masse de revêtement et le retour du capteur de mesure en tenant compte du retard de la mesure m. Les correcteurs 21 et 24 permettant d'améliorer les performances globales de la régulation en apportant une correction immédiate du signal ΔP. Ceci est obtenu pour des variations très importantes de la vitesse de défilement qui, comme indiqué plus haut, peut varier dans des proportions de 1 à 6.

Par ailleurs, du fait que le prédicteur permet d'obtenir une régulation correcte même en l'absence de signaux de mesure de contrôle améliore encore le rendement de l'installation de galvanisation. Enfin, l'utilisation de matériel et de logiciel spécialisés permet de définir une installation de régulation très rapidement, de l'ordre de quelques semaines, alors que par les procédés classiques de détermination d'un modèle physique ou mathématique, la mise au point d'un système de réglage pouvait demander plusieurs années.

Un autre avantage de l'invention résulte dans le fait que, grâce au prédicteur, lorsque l'on change des paramètres de l'installation, en particulier la valeur de consigne, on peut obtenir dès le début du processus une régulation correcte, ce qui diminue les pertes en zinc.

**Revendications**

1.  Procédé de régulation en boucle fermée d'un traitement métallurgique effectué sur un produit (1) en défilement, traitement dans lequel la mesure de contrôle est obtenue avec un retard important et variable par rapport au traitement régulé, procédé dans lequel on utilise un régulateur numérique (14) à calibrage dynamique (fonction de transfert échantillonnée RST), caractérisé en ce que l'on fait varier en permanence la fréquence d'échantillonnage de telle sorte que le retard précité reste toujours égal à un nombre entier prédéterminé de périodes d'échantillonnage.

2.  Procédé de régulation selon la revendication 1, caractérisé en ce que la fonction de transfert du régulateur (14) est déterminée pour un nombre d'échantillonnages (horizon) (Tn), supérieur ou égal au nombre de périodes d'échantillonnages correspondant au retard précité.

3.  Procédé de régulation selon la revendication 1 ou 2, caractérisé en ce que la mesure de contrôle peut être remplacée par une prédiction de résultat fournie par un prédicteur (26) à partir de la valeur du paramètre de régulation (P).

4.  Procédé de régulation selon la revendication 3, caractérisé en ce que le prédicteur fonctionne en calibrage dynamique, ses signaux de sortie ($\widehat{m}$) étant comparés avec le signal de mesure de contrôle (m).

5.  Procédé de régulation selon la revendication 3, caractérisé en ce que l'algorithme du prédicteur (26) est obtenu par identification récursive.

6.  Procédé de régulation selon l'une quelconque des revendications 1 à 5, caractérisé en ce que le régulateur (14) effectue une régulation à objectifs indépendants et utilise au moins un correcteur (21) introduisant une correction tenant compte de la vitesse de défilement du produit.

7.  Procédé de régulation selon la revendication 6, caractérisé en ce que la fréquence d'échantillonnage varie en fonction de la vitesse de défilement du produit à traiter (1).

8.  Procédé de régulation selon la revendication 6, dans lequel le traitement est réalisé par un actionneur fixe (4,5;11) disposé sur le trajet du produit à traiter, caractérisé en ce que l'on utilise un correcteur (24) introduisant une correction tenant compte de la position du produit par rapport audit actionneur.

9.  Procédé de régulation selon la revendication 6 ou 8, caractérisé en ce que les algorithmes de chacun des correcteurs (21,24) sont déterminés par une méthode d'identification récursive.

**10.** Procédé de régulation selon la revendication 7, appliqué à la régulation d'un traitement sur les deux faces d'un produit en forme de bande (1), caractérisé en ce qu'on prévoit un régulateur pour le traitement de chacune des deux faces.

**11.** Dispositif de régulation en boucle fermée d'un actionneur (4,5;11) de traitement métallurgique effectué sur un produit (1) en défilement, comportant un appareil (12) pour réaliser une mesure de contrôle avec un retard important et variable par rapport au traitement régulé et un régulateur numérique (14) à calibrage dynamique (fonction de transfert échantillonnée RST), caractérisé en ce qu'il comporte des moyens (14) pour faire varier en permanence la fréquence d'échantillonnage de telle sorte que le retard précité reste toujours égal à un nombre entier de périodes d'échantillonnage.

**12.** Dispositif selon la revendication 11, caractérisé en ce qu'il comporte un capteur de vitesse (18) disposé sur un rouleau d'entraînement du produit à traiter.

**13.** Dispositif selon la revendication 11, caractérisé en ce qu'il comporte un capteur (23) de type capacitif de la position du produit à traiter (1) par rapport audit actionneur (4,5;11).

**14.** Dispositif selon la revendication 11, caractérisé en ce qu'il comporte un commutateur bistable (27) reliant une entrée du régulateur numérique soit à la sortie d'un prédicteur de résultat (26) à partir de la valeur du paramètre de régulation (P), soit à la sortie de l'appareil effectuant la mesure de contrôle.

**Claims**

**1.** A process for closed-loop regulation of a metallurgical treatment carried out on a moving product (1), in which treatment the control measurement is obtained with a time-lag which is considerable and is variable in relation to the regulated treatment, in which process a digital regulator (14) with dynamic calibration (sampled transfer function RST) is used, **characterised in that** the sampling frequency is caused to vary continuously, in such a way that the aforementioned time-lag is always equal to a predetermined whole number of sampling periods.

**2.** A regulation process in accordance with claim 1, **characterised in that** the transfer function of the regulator (14) is determined for a number of sampling actions (horizon) (Tn) which is greater than or equal to the number of sampling periods corresponding to the aforementioned time-lag.

**3.** A regulation process in accordance with claim 1 or 2, **characterised in that** the control measurement can be replaced by a prediction of the result, supplied by a predictor (26) on the basis of the value of the regulation parameter (P).

**4.** A regulation process in accordance with claim 3, **characterised in that** the predictor operates with dynamic calibration, the output signals (m) therefrom being compared with the control measurement signal (m).

**5.** A regulation process in accordance with claim 3, **characterised in that** the algorithm of the predictor (26) is obtained by recursive identification.

**6.** A regulation process in accordance with any one of claims 1 to 5, **characterised in that** the regulator (14) carries out regulation with independent objectives, and uses at least one corrector (21) which introduces a correction taking account of the speed of movement of the product.

**7.** A regulation process in accordance with claim 6, **characterised in that** the sampling frequency varies as a function of the speed of movement of the product (1) for treatment.

**8.** A regulation process in accordance with claim 6, in which the treatment is carried out by a fixed actuator (4, 5; 11) arranged on the path of the product for treatment, **characterised in that** a corrector (24) is used, introducing a correction taking account of the position of the product in relation to the said actuator.

9. A regulation process in accordance with claim 6 or 8, **characterised in that** the algorithms of each corrector (21, 24) are determined by a recursive identification method.

10. A regulation process in accordance with claim 7, applied to the regulation of treatment of the two surfaces of a strip-shaped product (1), **characterised in that** a [respective] regulator is provided for the treatment of each of the two surfaces.

11. A device for closed-loop regulation of an actuator (4, 5; 11) for metallurgical treatment carried out on a moving product (1), comprising:
   - an apparatus (12) to provide a control measurement with a time-lag which is considerable and is variable in relation to the regulated treatment, and
   - a digital regulator (14) with dynamic calibration (sampled transfer function RST),
   **characterised in that** the said device comprises means (14) for continuous variation of the sampling frequency, in such a way that the aforementioned time-lag is always equal to a whole number of sampling periods.

12. A device in accordance with claim 11, **characterised in that** it comprises a speed sensor (18) arranged on a roller which drives the product for treatment.

13. A device in accordance with claim 11, **characterised in that** it comprises a sensor (23) of the capacitive type, to detect the position of the product (1) for treatment in relation to the said actuator (4, 5; 11).

14. A device in accordance with claim 11, **characterised in that** it comprises a bistable switch (27) connecting an input of the digital regulator either to the output of a result predictor (26) which predicts on the basis of the value of the regulation parameter (P), or to the output from the apparatus taking the control measurement.

## Patentansprüche

1. Regelungsverfahren für eine metallurgische Behandlung, die an einem durchlaufenden Produkt (1) vorgenommen wird und bei der der Überwachungsmeßwert mit einer wesentlichen und variablen Verzögerung in bezug auf die geregelte Behandlung erhalten wird, bei welchem Verfahren ein Digitalregler (14) mit dynamischer Kalibrierung (Sampling-Übertragungsfunktion RST) verwendet wird, **dadurch gekennzeichnet,** daß die Häufigkeit der Stichprobennahme dauernd dergestalt verändert wird, daß die genannte Verzögerung immer einer vorgegebenen ganzen Zahl von Stichprobenperioden gleich bleibt.

2. Regelungsverfahren nach Anspruch 1, **dadurch gekennzeichnet,** daß die Übertragungsfunktion des Reglers (14) für eine Anzahl von Stichprobennahmen (Horizont) (Tn) festgelegt wird, die größer ist als die Anzahl der der genannten Verzögerung entsprechenden Stichprobenperioden oder gleich groß.

3. Regelungsverfahren nach einem der Ansprüche 1 oder 2, **dadurch gekennzeichnet,** daß der Überwachungsmeßwert durch die Voraussage eines Ergebnisses ersetzt werden kann, das von einer Vorhersageeinrichtung (26) ausgehend vom Wert des Regelungsparameters (P) geliefert wird.

4. Regelungsverfahren nach Anspruch 3, **dadurch gekennzeichnet,** daß die Vorhersageeinrichtung mit dynamischer Kalibrierung arbeitet, wobei ihre Ausgangssignale ($\widehat{m}$) mit dem Überwachungsmeßsignal (m) verglichen werden.

5. Regelungsverfahren nach Anspruch 3, **dadurch gekennzeichnet,** daß der Vorhersagealgorithmus (26) durch rekursive Erkennung erhalten wird.

6. Regelungsverfahren nach einem der Ansprüche 1 bis 5, **dadurch gekennzeichnet,** daß der Regler (14) eine Regelung auf unabhängige Sollwerte ausführt und mindestens eine Korrektureinrichtung (21) verwendet, die eine die Durchlaufgeschwindigkeit des Produkts berücksichtigende Korrektur einführt.

**7.** Regelungsverfahren nach Anspruch 6, **dadurch gekennzeichnet,** daß sich die Stichprobenhäufigkeit als Funktion der Durchlaufgeschwindigkeit des zu behandelnden Produkts (1) ändert.

**8.** Regelungsverfahren nach Anspruch 6, bei dem die Behandlung durch eine feststehende Wirkeinrichtung (4, 5; 11) vorgenommen wird, die über der Bahn des zu behandelnden Produkts angeordnet ist, **dadurch gekennzeichnet,** daß eine Korrektureinrichtung (24) verwendet wird, die eine die Position des Produkts in bezug auf die genannte Wirkeinrichtung berücksichtigende Korrektur einführt.

**9.** Regelungsverfahren nach einem der Ansprüche 6 oder 8, **dadurch gekennzeichnet,** daß die Algorithmen jeder Korrektureinrichtung (21, 24) durch ein rekursives Erkennungsverfahren bestimmt werden.

**10.** Regelungsverfahren nach Anspruch 7 in Anwendung auf die Regelung der Behandlung der zwei Seiten eines bandförmigen Produkts (1), **dadurch gekennzeichnet,** daß für die Behandlung jeder der zwei Seiten ein Regler vorgesehen ist.

**11.** Regelungsvorrichtung für ein Wirkglied (4, 5; 11) zur an einem durchlaufenden Produkt (1) ausgeführten metallurgischen Behandlung, mit einer Einrichtung (12) zum Vornehmen einer Überwachungsmessung mit einer wesentlichen und variablen Verzögerung in bezug auf die geregelte Behandlung, und mit einem Digitalregler (14) mit dynamischer Kalibrierung (Sampling-Übertragungsfunktion RST), **dadurch gekennzeichnet,** daß sie eine Einrichtung (14) zum dauernden Verändern der Häufigkeit der Stichprobennahme in solcher Weise aufweist, daß die genannte Verzögerung immer einer ganzen Zahl an Stichprobenperioden gleich bleibt.

**12.** Vorrichtung nach Anspruch 11, **dadurch gekennzeichnet,** daß sie einen Geschwindigkeitssensor (18) aufweist, der an einer Antriebsrolle für das zu behandelnde Produkt angebracht ist.

**13.** Vorrichtung nach Anspruch 11, **dadurch gekennzeichnet,** daß sie einen kapazitiven Sensor (23) für die Position des zu behandelnden Produkts (1) in bezug auf das genannte Wirkglied (4, 5; 11) aufweist.

**14.** Vorrichtung nach Anspruch 11, **dadurch gekennzeichnet,** daß sie einen Umschalter (27) aufweist, der einen Eingang des Digitalreglers entweder mit dem Ausgang einer Vorhersageeinrichtung für ein Ergebnis (26) ausgehend vom Wert des Regelungsparameters (P) oder mit dem Ausgang der die Überwachungsmessung ausführenden Einrichtung verbindet.

FIG.1

FIG.2

FIG. 3

FIG.4

# FIG.5

# FIG.6